# EUROPEAN PATENT APPLICATION

(11) **EP 4 800 683 A1**
(43) Date of publication of application: **02.09.2026**
(21) Application number: 26156808.3
(22) Date of filing: 06.02.2026
(51) Int. Cl.: G09G 5/10

(54) **DISPLAY MODULE AND IN-VEHICLE DEVICE**

(30) Priority: 27.02.2025 US 202563763921 P; 27.11.2025 CN 202511756392
(71) Applicant: InnoLux Corporation, Chu-Nan, Miao-Li 350 (TW)
(72) Inventor: HSIEH, Hong-Sheng, 350 Miao-Li County (TW); HSIEH, Chia-Hsien, 350 Miao-Li County (TW)
(74) Representative: Straus, Alexander

(57) **Abstract**

In a display module (DM), a light source structure (200) is configured to provide light to a display panel (100) and includes a first portion (200a) corresponding to a first region (R1) of the display module (DM), and a light source controller is electrically connected to the light source structure (200) and configured to provide a first signal to the first portion (200a) of the light source structure (200). The first region (R1) has a first brightness curve including a first brightness and a second brightness, the first brightness is a brightness in a direction parallel to a normal direction of the display panel (100), the second brightness is a brightness at an angle with respect to the normal direction that is not equal to 0 degrees, and the second brightness is greater than the first brightness.

## Description

### Field of the Disclosure

The present disclosure relates to a display module and an in-vehicle device capable of allowing a user to view an image with uniform brightness.

### Background of the Disclosure

When a user views an image displayed by a conventional electronic device having a display function, even if the displayed grayscale is the same, the user may still perceive different brightness at different positions of the displayed image, resulting in non-uniform brightness of the displayed image. In addition, the brightness of the displayed image of a conventional electronic device with a display function and a privacy function may also be non-uniform. Therefore, these electronic devices need to be improved, so as to enhance the brightness uniformity of the displayed image viewed by the user.

### Summary of the Disclosure

This in mind, the present disclosure aims at providing a display module and an in-vehicle device capable of allowing a user to view an image with uniform brightness
This is achieved by a display module and an in-vehicle device according to the independent claims. The dependent claims pertain to corresponding further developments and improvements.

As will be seen more clearly from the detailed description following below, the claimed display module has a first region. The display module includes a display panel, a light source structure and a light source controller. The light source structure is configured to provide light to the display panel and includes a first portion, wherein the first portion is corresponding to the first region. The light source controller is electrically connected to the light source structure and configured to provide a first signal to the first portion of the light source structure. The first region has a first brightness curve, the first brightness curve includes a first brightness and a second brightness, the first brightness is a brightness in a direction parallel to a normal direction of the display panel, the second brightness is a brightness at an angle with respect to the normal direction that is not equal to 0 degrees, and the second brightness is greater than the first brightness.

As will be seen more clearly from the detailed description following below, the claimed in-vehicle device includes a detecting system, an in-vehicle computer and a display module. The detecting system is configured to determine an eye viewing position and generates an eye position signal. The in-vehicle computer is electrically connected to the detecting system, and configured to generate an adjustment signal according to the eye position signal. The display module has a first region, and the display module is electrically connected to the in-vehicle computer to receive the adjustment signal, wherein the display module includes a display panel, a light source structure and a light source controller. The light source structure is configured to provide light to the display panel and includes a first portion, wherein the first portion is corresponding to the first region. The light source controller is electrically connected to the light source structure, and the light source controller is configured to provide a first signal to the first portion of the light source structure according to the adjustment signal. The first region has a first brightness curve, the first brightness curve includes a first brightness and a second brightness, the first brightness is a brightness in a direction parallel to a normal direction of the display panel, the second brightness is a brightness at an angle with respect to the normal direction that is not equal to 0 degrees, and the second brightness is greater than the first brightness.

### Brief Description of the Drawings

In the following, the disclosure is further illustrated by way of example, taking reference to the accompanying drawings. Thereof
FIG. 1 is a schematic diagram illustrating a cross-sectional view of a display module according to an embodiment of the present disclosure,
FIG. 2 is a schematic diagram illustrating several light types generated by the light source structure of the present disclosure,
FIG. 3 is a schematic diagram illustrating brightness curves corresponding to the light types shown in FIG. 2,
FIG. 4 is a schematic diagram illustrating a connection of components within an in-vehicle device according to an embodiment of the present disclosure,
FIG. 5 is a schematic diagram illustrating relationships between viewing angles of respective regions of the in-vehicle device and users according to an embodiment of the present disclosure,
FIG. 6 is a schematic diagram illustrating brightness curves of the respective regions shown in FIG. 5,
FIG. 7 is a schematic diagram illustrating image brightness received by the users shown in FIG. 5,
FIG. 8 is a schematic diagram illustrating relationships between viewing angles of respective regions of the in-vehicle device and a user according to another embodiment of the present disclosure, and
FIG. 9 is a schematic diagram illustrating brightness curves of the respective regions shown in FIG. 8.

### Detailed Description

In the present disclosure, directions X, Y, and Z in the drawings are perpendicular to each other, wherein the directions X and Y are horizontal directions, and the direction Z is a vertical/top-view direction.

In the present disclosure, it should be noted that the term "overlap" means that two elements overlap along the direction Z, and the term "overlap" can be "partially overlap" or "completely overlap" in unspecified circumstances.

Although terms such as first, second, third, etc., may be used to describe diverse constituent elements, such constituent elements are not limited by the terms. These terms are used only to discriminate a constituent element from other constituent elements in the specification, and these terms have no relation to the manufacturing order of these constituent components. The claims may not use the same terms, but instead may use the terms first, second, third, etc. with respect to the order in which an element is claimed. Accordingly, in the following description, a first constituent element may be a second constituent element in a claim.

It should be noted that the technical features in different embodiments described in the following can be replaced, recombined, or mixed with one another to constitute another embodiment without departing from the spirit of the present disclosure.

In the present disclosure, the electronic device may include a display device (a display module), a lighting device, an antenna device, a sensing device, an in-vehicle device, a tiled device or a combination thereof, but not limited thereto. The light emitting device may be capable of generating light, so as to serve as a light source (e.g., a backlight module), a display device capable of displaying or other suitable light emitting device. The display device may be a non-self-luminous type display device or a self-luminous type display device based on requirement(s), and the display device may be a color display device or a monochrome display device based on requirement(s). The antenna device may be a liquid-crystal-type antenna device or a non-liquid-crystal-type antenna device, the sensing device may be a device for sensing capacitance, light, thermal or ultrasonic, and the tiled device may be a tiled display device or a tiled antenna device, but not limited thereto. For example, the light emitting diode within the electronic device may include an organic light emitting diode (OLED), a mini LED, a micro LED or a quantum dot LED, but not limited thereto. The electronic device may have a peripheral system (such as a driving system, a control system, a light system, etc.) for supporting the device(s) and the component(s) in the electronic device.

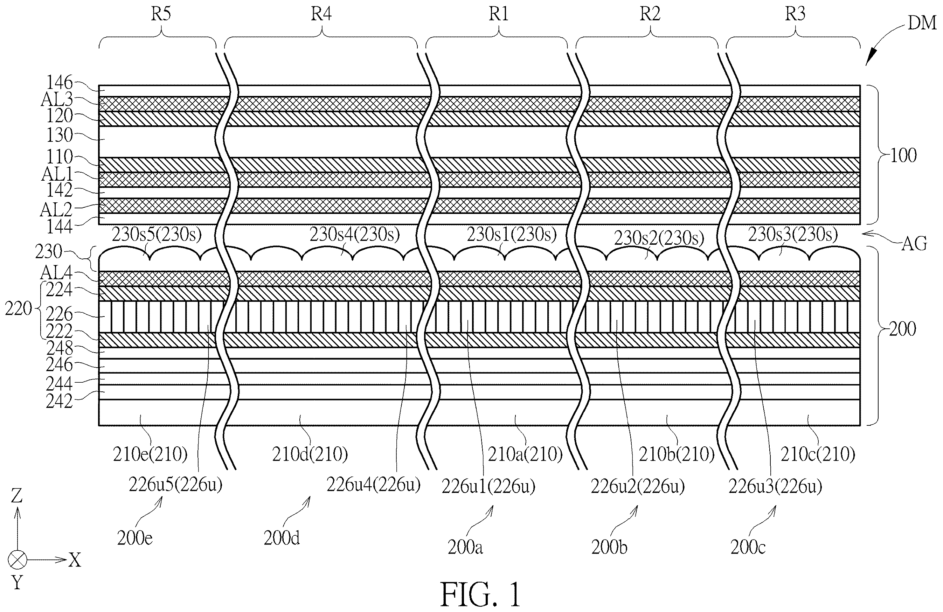

Referring to FIG. 1, FIG. 1 is a schematic diagram illustrating a cross-sectional view of a display module according to an embodiment of the present disclosure. As shown in FIG. 1, the display module DM is configured to display an image. For example, the display module DM may be a non-self-luminous type display module. The display module DM may include a plurality of pixels serving as units for displaying the image, wherein each pixel may include at least one sub-pixel, and the number and color of the sub-pixel(s) in each pixel may be varied based on requirement(s). For example, one pixel of the color display module DM may include three sub-pixels corresponding to different colors (e.g., red, green, and blue), and one pixel of the monochrome display module DM may include one sub-pixel, but not limited thereto.

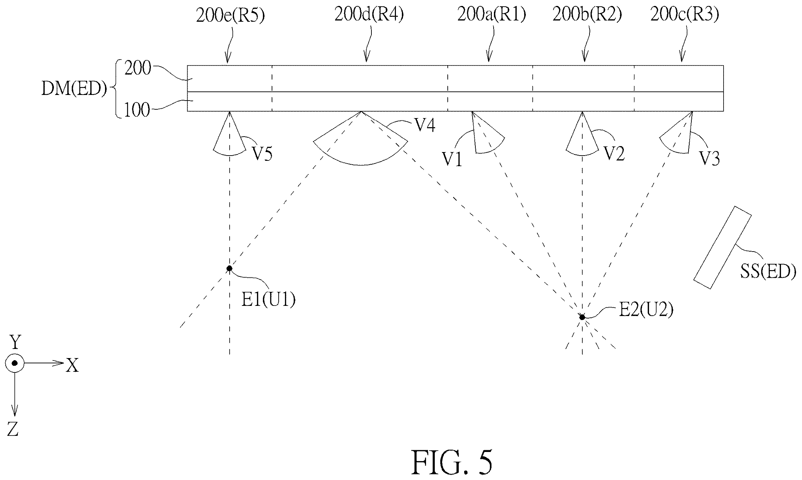

In FIG. 1, the display module DM may be divided into a plurality of regions (e.g., five regions R1, R2, R3, R4, and R5) based on requirement(s), and each region may perform corresponding display based on requirement(s). For example (as shown in FIG. 1 and FIG. 5), the display module DM may be disposed in a vehicle, wherein a region R1 (also referred as a first region), a region R2 (also referred as a second region) and a region R3 (also referred as a third region) may be respectively corresponding to a left region, a middle region and a right region of a display in front of the front passenger (e.g., an in-vehicle infotainment system), a region R4 (also referred as a fourth region) may be corresponding to a center informative display, a region R5 (also referred as a fifth region) may be corresponding to a display on the left side of the driver (e.g., a warning display), and the regions R5, R4, R1, R2, and R3 are arranged along the direction X, but not limited thereto. In the present disclosure, the left side and the right side are based on the direction X. For example, the region R2 located on the right side of the region R1 indicates that the region R2 is at a positive position along the direction X relative to the region R1, and the region R2 located on the left side of the region R3 indicates that the region R2 is at a negative position along the direction X relative to the region R3. In one embodiment, the right side is a first side, but not limited thereto.

The display module DM may include a display panel 100, wherein the display panel 100 may adjust the light intensity of the light passing through each sub-pixel according to the displayed image (e.g., the higher displayed grayscale the sub-pixel has, the stronger light intensity the light has). In FIG. 1, the display panel 100 may include two polarizers 110 and 120 and a display layer 130 disposed between these polarizers 110 and 120. In some embodiments, the display layer 130 may include two substrates, a display medium layer disposed between these substrates and a display circuit layer configured to control the display medium layer. The displayed grayscale control caused by the display circuit layer and the display medium layer, in combination with the two polarizers 110 and 120, may control the light intensity of the light passing through each sub-pixel. For example, the substrates may be rigid or flexible, and may include suitable material(s) based on their types. For example, the display medium layer may include any suitable medium material (e.g., liquid crystal molecules). For example, the display circuit layer may include switching components (e.g., thin-film transistors), pixel electrodes, common electrode(s), scan lines, data lines, capacitors and/or other required component(s). It should be noted that a normal direction of the display panel 100 may be parallel to the direction Z, and the directions X and Y may be parallel to a display surface of the display panel 100.

The display module DM may include a light source structure 200, wherein the display panel 100 is disposed on the light source structure 200, and an air gap AG exists between the display panel 100 and the light source structure 200. The light source structure 200 is configured to provide light (e.g., backlight) to the display panel 100. In FIG. 1, the light source structure 200 may include a light emitting layer 210 configured to generate the light (e.g., the backlight), wherein the light emitting layer 210 may include at least one light emitting element (e.g., a light emitting diode). For example, the light source structure 200 may be a direct-type backlight module and include a plurality of light emitting elements, but not limited thereto.

In FIG. 1, the light source structure 200 may include a light adjusting device 220 disposed between the light emitting layer 210 and the display panel 100, wherein the light adjusting device 220 may include two polarizers 222 and 224 and a light adjusting layer 226 disposed between these polarizers 222 and 224. The light adjusting layer 226 may include a plurality of light adjusting units 226u, and each light adjusting unit 226u may adjust the light intensity of the light passing through the light adjusting device 220 based on a received dimming grayscale (e.g., the higher dimming grayscale the light adjusting unit 226u receives, the stronger light intensity the light has). In some embodiments, the light adjusting layer 226 may include two substrates, a light adjusting medium layer disposed between the two substrates, and a light adjusting circuit layer configured to control the light adjusting medium layer. The dimming grayscale control caused by the light adjusting circuit layer and the light adjusting medium layer, in combination with these polarizers 222 and 224, may control the light intensity of the light passing through respective regions of the light adjusting device 220. For example, the substrates of the light adjusting device 220 may be rigid or flexible, and may include suitable material(s) based on their types. For example, the light adjusting medium layer may include any suitable medium material (e.g., liquid crystal molecules), and the material of the light adjusting medium layer may be the same as or different from the material of the display medium layer. For example, the light adjusting circuit layer may include switching elements (e.g., thin-film transistors), electrodes, conductive traces and/or other required component(s).

In FIG. 1, the light source structure 200 may include a light path adjustment layer 230 disposed between the light adjusting device 220 and the display panel 100, wherein the light path adjustment layer 230 may adjust the path of the light through an appropriate adjustment manner (e.g., refraction and/or reflection) and may have a corresponding structure according to its adjustment manner. For example, the light path adjustment layer 230 may include a plurality of lenses 230s, and each lens 230s may be corresponding to at least two light adjusting units 226u, but not limited thereto. For example, the light path adjustment layer 230 may be adhered to the light adjusting device 220 through an adhesive layer AL4, but not limited thereto.

In the present disclosure, the light source structure 200 may include a plurality of portions (e.g., five portions 200a, 200b, 200c, 200d and 200e, which may be sequentially referred as a first portion, a second portion, a third portion, a fourth portion, and a fifth portion), wherein these portions may be respectively corresponding to (or overlap) the regions of the display module DM (e.g., five regions R1, R2, R3, R4 and R5). Similarly, the light emitting layer 210 may have a plurality of light emitting regions 210a, 210b, 210c, 210d and 210e (the light emitting elements in the light emitting layer 210 are also distinguished through these light emitting regions), which are respectively located in five portions 200a, 200b, 200c, 200d and 200e of the light source structure 200 and/or respectively corresponding to (or overlap) five regions R1, R2, R3, R4 and R5 of the display module DM (e.g., the light emitting regions 210a, 210b, 210c, 210d and 210e may be sequentially referred as a first light emitting region, a second light emitting region, a third light emitting region, a fourth light emitting region and a fifth light emitting region). In addition, in the light adjusting layer 226, the light adjusting units 226u respectively located in the portions 200a, 200b, 200c, 200d and 200e may be distinguished as light adjusting units 226u1, 226u2, 226u3, 226u4 and 226u5 (or sequentially referred as a first light adjusting unit, a second light adjusting unit, a third light adjusting unit, a fourth light adjusting unit and a fifth light adjusting unit). In the light path adjustment layer 230, the lenses 230s respectively located in the portions 200a, 200b, 200c, 200d and 200e may be distinguished as lenses 230s1, 230s2, 230s3, 230s4 and 230s5, wherein the lens 230s1 (or referred as a first lens) may be corresponding to or overlap at least two light adjusting units 226u1, the lens 230s2 (or referred as a second lens) may be corresponding to or overlap at least two light adjusting units 226u2, the lens 230s3 (or referred as a third lens) may be corresponding to or overlap at least two light adjusting units 226u3, the lens 230s4 (or referred as a fourth lens) may be corresponding to or overlap at least two light adjusting units 226u4, and the lens 230s5 (or referred as a fifth lens) may be corresponding to or overlap at least two light adjusting units 226u5.

In addition, the light source structure 200 may optionally have a local dimming function, so that the brightness of the light emitting elements in the light emitting layer 210 may be individually controlled. Therefore, in the light emitting layer 210, the light emitting elements located in the same light emitting region may be individually controlled to generate light with the same light intensity or different light intensities.

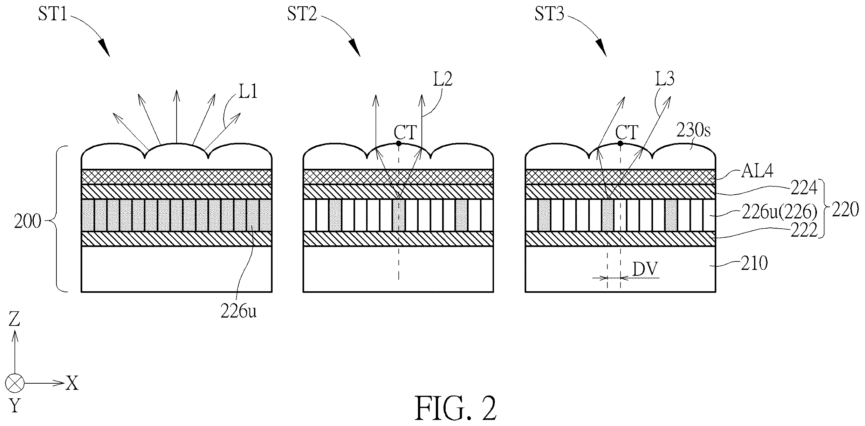

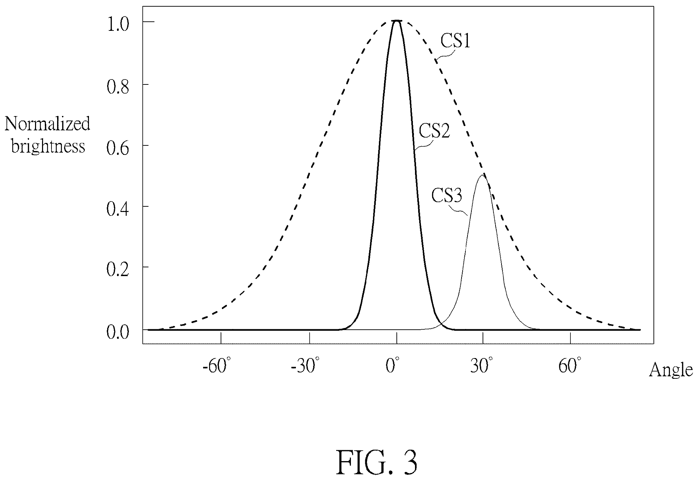

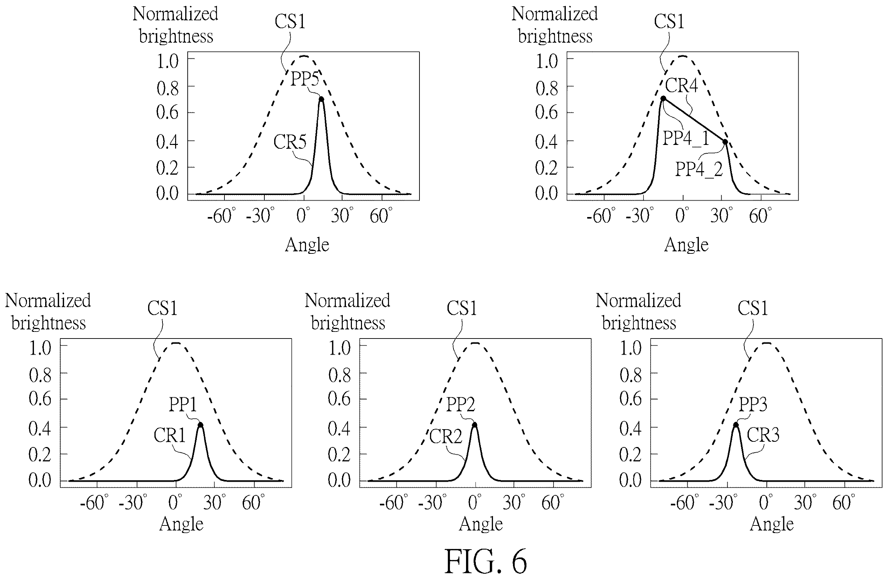

In the present disclosure, the light source structure 200 may generate multiple light types, and the portions 200a, 200b, 200c, 200d and 200e may generate required light types based on requirement(s). Through the control of the light types, a specific user views an image with uniform brightness and/or the privacy function is performed to prevent a specific user from viewing an image. FIG. 2 and FIG. 3 illustrate light types L1, L2 and L3 and their corresponding brightness curves CS1, CS2 and CS3. In FIG. 2, the light adjusting units 226u shown with a dotted shading are turned on (i.e., the dimming grayscale is greater than 0), while the other light adjusting units 226u are turned off (i.e., the dimming grayscale is equal to 0). It should be noted that the term "normalized brightness" described in the drawings (e.g., FIG. 3, FIG. 6, and FIG. 7) refers to brightness processed by normalization, such that the maximum value of the normalized brightness is 1. The term "angle" described in the drawings (e.g., FIG. 3 and FIG. 6) refers to an angle between this direction and the normal direction of the display panel 100 (i.e., the direction Z) in a plane parallel to the directions X and Z, wherein the "angle" is corresponding to the "viewing angle" in this disclosure. Therefore, an angle equal to 0 degrees indicates that this direction is parallel to the direction Z and corresponding to a front viewing angle, an angle greater than 0 degrees indicates that this direction has a positive component of the direction X and is corresponding to a right viewing angle, and an angle less than 0 degrees indicates that this direction has a negative component of the direction X and is corresponding to a left viewing angle. It should be noted that the brightness curve may be measured by any suitable equipment (e.g., conometer).

In a state ST1 (e.g., a wide viewing angle state or a sharing state) of FIG. 2 and its corresponding brightness curve CS1 in FIG. 3, all light adjusting units 226u of the light adjusting layer 226 are turned on and have the highest dimming grayscale, so that the light source structure 200 may provide the maximum viewing angle and correspondingly provide the maximum extreme brightness at each viewing angle. In a state ST2 (e.g., a front narrow viewing angle state or a privacy state) of FIG. 2 and its corresponding brightness curve CS2 in FIG. 3, some light adjusting units 226u of the light adjusting layer 226 are turned on and have the highest dimming grayscale, and the light source structure 200 may provide the corresponding maximum extreme brightness at the front viewing angle and provide relatively low brightness at other viewing angles (i.e., the brightness at an angle of 0 degrees is greater than the brightness at other angles) through the adjustment of the light path adjustment layer 230. In a state ST3 (e.g., a side narrow viewing angle state or a privacy state) of FIG. 2 and its corresponding brightness curve CS3 in FIG. 3, some light adjusting units 226u of the light adjusting layer 226 are turned on and have the highest dimming grayscale, and the light source structure 200 may provide the corresponding maximum extreme brightness at a side viewing angle (e.g., a right viewing angle) and provide relatively low brightness at other viewing angles (i.e., the brightness at a specific angle not equal to 0 degrees is greater than the brightness at an angle of 0 degrees and the brightness at other angles) through the adjustment of the light path adjustment layer 230. It should be noted that the term "maximum extreme brightness" described herein refers to the maximum brightness that the light source structure 200 can generate at the corresponding viewing angle (corresponding angle).

In addition, in the states ST2 and ST3 of FIG. 2, an offset DV of the turned-on light adjusting unit 226u relative to a center CT of the corresponding lens 230s in the cross-sectional direction (e.g., the direction X) in the state ST3 may be greater than an offset (e.g., 0) of the turned-on light adjusting unit 226u relative to a center CT of the corresponding lens 230s in the cross-sectional direction (e.g., the direction X) in the state ST2, so as to achieve the aforementioned effect of adjusting the viewing angle.

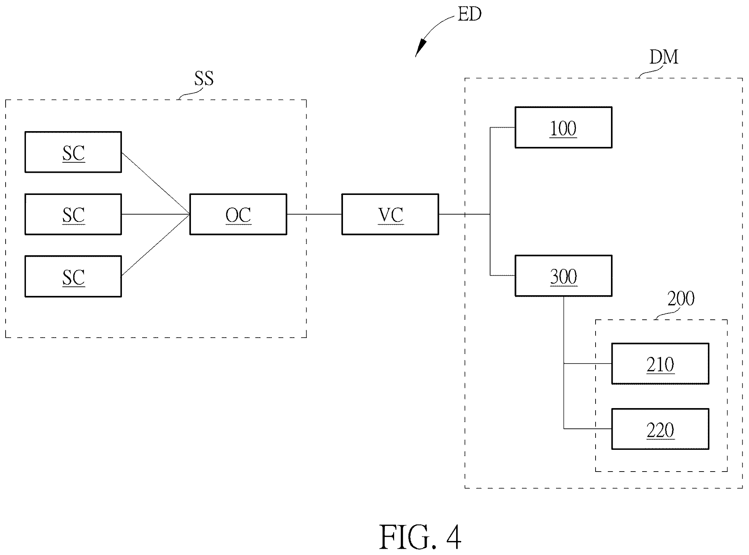

The display module DM may further include a light source controller 300 (e.g., FIG. 4) electrically connected to the light source structure 200 (e.g., the light emitting layer 210 and the light adjusting device 220) and including any suitable computing component, wherein the light source controller 300 controls the light source structure 200 through signals. For example, the light source controller 300 respectively provides corresponding signals to the portions 200a, 200b, 200c, 200d and 200e (these signals may be sequentially referred as a first signal, a second signal, a third signal, a fourth signal and a fifth signal), so that the portions 200a, 200b, 200c, 200d and 200e may generate the light with the same light type or different light types.

In some embodiments, the display module DM may optionally include other required components and/or structures. For example, the display panel 100 of the display module DM may include optical films, such as a light diffusion film 144, a light leakage suppression layer 142 and an anti-reflection film 146, so as to affect light and improve image quality. The light leakage suppression layer 142 may be adhered to a side of the polarizer 110 opposite to the display layer 130 through an adhesive layer AL1, the light diffusion film 144 may be adhered to a side of the light leakage suppression layer 142 opposite to the display layer 130 through an adhesive layer AL2, and the anti-reflection film 146 may be adhered to a side of the polarizer 120 opposite to the display layer 130 through an adhesive layer AL3, but not limited thereto. In FIG. 1, the light source structure 200 of the display module DM may include optical films, such as a light diffusion film 242, a brightness enhancement film (BEF) 244, a dual brightness enhancement film (DBEF) 246 and a light control film (LCF) 248 sequentially stacked on the light emitting layer 210, so as to affect light and improve image quality, but not limited thereto. For example, the adhesive layers AL1, AL2, AL3 and AL4 may respectively be a pressure sensitive adhesive (PSA), an optically clear adhesive (OCA) or other suitable adhesive layer based on requirement(s).

In the present disclosure, the display module DM may be applied to an in-vehicle device ED disposed in a vehicle. In the in-vehicle device ED shown in FIG. 4, the in-vehicle device ED may further include a detecting system SS configured to determine an eye viewing position of a user and an in-vehicle computer VC configured for computation, wherein the in-vehicle computer VC may be electrically connected to the detecting system SS and the display module DM.

For instance, in FIG. 4, the detecting system SS may include at least one sensor SC and a computing component OC (e.g., a microcontroller (MCU)), wherein the sensor SC is configured to detect the eye viewing position of the user (such as the driver or the front passenger), the computing component OC is electrically connected to the sensor SC, and the computing component OC generates an eye position signal according to the eye viewing position, but not limited thereto. For instance, the detecting system SS may also detect the status of the user. For instance, the detecting system SS may be a driver monitoring system (DMS), but not limited thereto.

In FIG. 4, the in-vehicle computer VC may be configured to generate an adjustment signal according to the eye position signal provided by the detecting system SS, and to transmit the adjustment signal to the display module DM, such that the light source controller 300 respectively provides corresponding signals to the portions 200a, 200b, 200c, 200d and 200e of the light source structure 200 according to the adjustment signal, thereby controlling the light types generated by the portions 200a, 200b, 200c, 200d and 200e. In some embodiments, the adjustment signal may include a signal indicating a non-direct eye viewing position, wherein the term "non-direct eye viewing position" refers to an eye position that is not located at the front viewing angle of at least one of the regions R1, R2, R3, R4 and R5 of the display module DM.

In some embodiments, the in-vehicle computer VC may calculate or perform a table lookup according to the eye position signal to obtain the adjustment signal(s) having image information, and the light source controller 300 may calculate the dimming grayscale of each light adjusting unit 226u according to the adjustment signal(s) (or according to the adjustment signal(s) and the local dimming function) to output the corresponding signal(s), thereby controlling the light types generated by the portions 200a, 200b, 200c, 200d and 200e of the light source structure 200, but not limited thereto. In some embodiments, the in-vehicle computer VC may output the adjustment signal(s) with corresponding coding according to the eye position signal, and the light source controller 300 may perform a table lookup according to the adjustment signal(s) (or according to the adjustment signal(s) and the local dimming function) to obtain the dimming grayscale of each light adjusting unit 226u and output corresponding signal(s), thereby controlling the light types generated by the portions 200a, 200b, 200c, 200d and 200e of the light source structure 200, but not limited thereto.

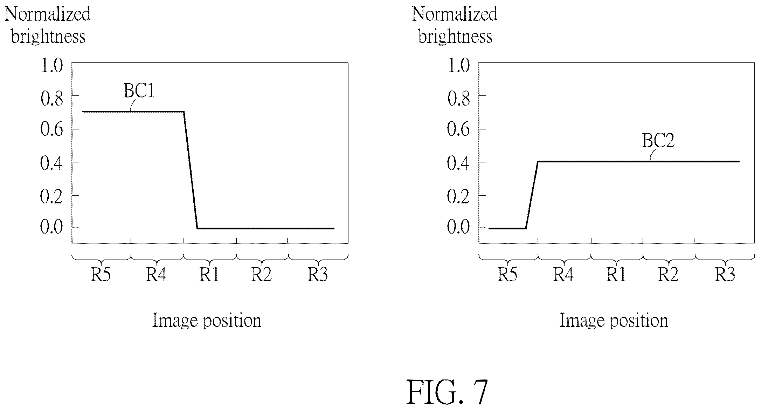

An example of using the in-vehicle device ED may be referred to FIG. 5 to FIG. 7, wherein FIG. 5 illustrates the relationships between viewable angles V1, V2, V3, V4 and V5 of the regions R1, R2, R3, R4 and R5 of the in-vehicle device ED and the users U1 and U2, and FIG. 6 and FIG. 7 illustrate brightness curves CR1, CR2, CR3, CR4 and CR5 corresponding to the regions R1, R2, R3, R4 and R5 in FIG. 5 and image brightness BC1 and BC2 received by the users U1 and U2. It should be noted that the brightness curve CR1 (also referred as a first brightness curve), the brightness curve CR2 (also referred as a second brightness curve), the brightness curve CR3 (also referred as a third brightness curve), the brightness curve CR4 (also referred as a fourth brightness curve) and the brightness curve CR5 (also referred as a fifth brightness curve) are respectively corresponding to the regions R1, R2, R3, R4 and R5 in FIG. 5. In FIG. 5, the regions R1, R2, R3, R4 and R5 of the display module DM may adjust their light types in real-time according to the eye viewing position E1 of the user U1 (e.g., the driver) and the eye viewing position E2 of the user U2 (e.g., the front passenger) detected by the detecting system SS.

In the design of FIG. 5 and FIG. 6, the user U1 may view the display images of the regions R4 and R5 and may not view the display images of the regions R1, R2 and R3, while the user U2 may view the display images of the regions R1, R2, R3 and R4 and may not view the display image of the region R5 (i.e., the regions R1, R2 and R3 provide the privacy function for the user U1, and the region R5 provides the privacy function for the user U2). For instance, the light type of the portions 200a and 200e of the light source structure 200 causes the regions R1 and R5 to be viewable only from the right viewing angle (e.g., the portions 200a and 200e are in the state ST3 providing the right viewing angle), the light type of the portion 200b of the light source structure 200 causes the region R2 to be viewable only from the front viewing angle (e.g., the portion 200b is in the state ST2), the light type of the portion 200c of the light source structure 200 causes the region R3 to be viewable only from the left viewing angle (e.g., the portion 200c is in the state ST3 providing the left viewing angle), and the light type of the portion 200d of the light source structure 200 causes the region R4 to be viewable from the left viewing angle, the front viewing angle and the right viewing angle. For instance, according to FIG. 6, the maximum brightness values of the brightness curves CR1, CR2 and CR3 (i.e., points PP1, PP2, PP3) are corresponding to the eye viewing position E2 of the user U2, points PP4_1 and PP4_2 of the brightness curve CR4 are respectively corresponding to the eye viewing positions E1 and E2 of the users U1 and U2, and the maximum brightness value of the brightness curve CR5 (i.e., a point PP5) is corresponding to the eye viewing position E1 of the user U1, but not limited thereto. For instance, the point PP4_1 of the brightness curve CR4 may be the maximum brightness value of the brightness curve CR4.

As shown in FIG. 6 and FIG. 7, the maximum brightness values of the brightness curves CR4 and CR5 may be the same (e.g., the normalized brightness is 0.7), so that the user U1 may view a uniform-brightness image in the regions R4 and R5. The maximum brightness values of the brightness curves CR1, CR2 and CR3 and the brightness of the point PP4_2 of the brightness curve CR4 may be the same (e.g., the normalized brightness is 0.4), so that the user U2 may view a uniform-brightness image in the regions R1, R2, R3 and R4. In some embodiments, in order to achieve the effect of uniform brightness, each light adjusting unit 226u of the light source structure 200 may have an appropriate dimming grayscale (the dimming grayscales may be the same or different from each other), wherein if a ratio of the required brightness at the viewing angle to the maximum extreme brightness at this viewing angle is smaller, the dimming grayscale of the light adjusting unit 226u corresponding to this viewing angle is smaller. In some embodiments, the effect of uniform brightness may also be achieved by adjusting the brightness of the light emitting elements of the light emitting layer 210 of the light source structure 200.

Optionally, in the brightness curve CR4, the brightness variation between the points PP4_1 and PP4_2 may be a monotonic function. Therefore, the image of the region R4 may still be viewed at a viewing angle between the viewing angle corresponding to the point PP4_1 and the viewing angle corresponding to the point PP4_2.

According to the above, in the brightness curves CR1, CR3, CR4 and CR5, the angles corresponding to the points PP1, PP3, PP4_1 and PP5 may not be equal to 0 degrees, and the brightness of the points PP1, PP3, PP4_1 and PP5 may be greater than the brightness corresponding to the angle equal to 0 degrees (i.e., the direction Z). Namely, the points PP1 and PP5 indicate that the brightness at the right viewing angle is greater than the brightness at the front viewing angle, and the points PP3 and PP4_1 indicate that the brightness at the left viewing angle is greater than the brightness at the front viewing angle. In the brightness curve CR4, the brightness corresponding to the angle equal to 0 degrees may be between the brightness of the point PP4_1 (corresponding to the angle less than 0 degrees) and the brightness of the point PP4_2 (corresponding to the angle greater than 0 degrees). In the brightness curve CR2, the angle corresponding to the point PP2 may be equal to 0 degrees, and the brightness of the point PP2 may be greater than the brightness corresponding to other angles (i.e., the point PP2 indicates that the brightness at the front viewing angle is greater than the brightness at other viewing angles).

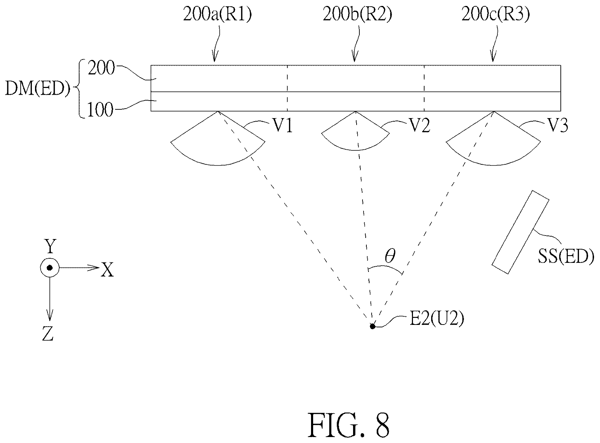

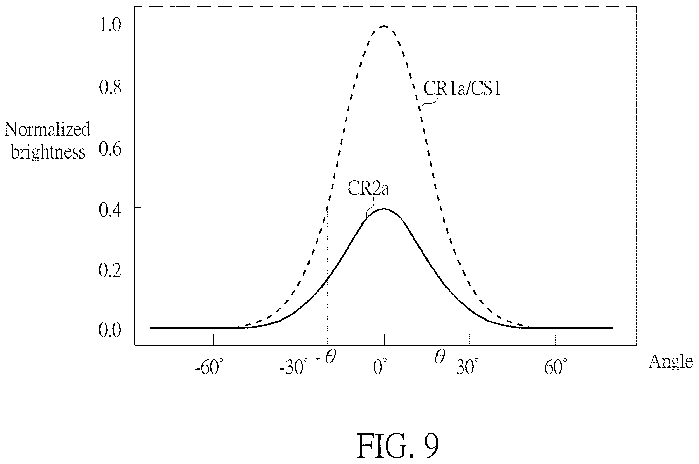

Another example of using the in-vehicle device ED may be referred to FIG. 8 and FIG. 9, wherein FIG. 8 illustrates the relationships between the viewable angles V1, V2 and V3 of the regions R1, R2 and R3 of the in-vehicle device ED and the user U2, and FIG. 9 illustrates the brightness curves CR1a and CR2a corresponding to the regions R1 R2 and R3 in FIG. 8. It should be noted that the brightness curve CR1a in FIG. 9 is corresponding to the regions R1 and R3 in FIG. 8, and the brightness curve CR2a in FIG. 9 is corresponding to the region R2 in FIG. 8. By adjusting the overall brightness of the portions 200a, 200b and 200c of the light source structure 200, the user U2 may view a uniform-brightness image in the regions R1, R2 and R3. For instance, in FIG. 8 and FIG. 9, the detecting system SS may determine the side viewing angles θ of the eye viewing position E2 of the user U2 with respect to the regions R1 and R3, calculate the brightness when viewing the regions R1 and R3 at these side viewing angles θ (e.g., the normalized brightness is 0.4), and then correspondingly reduce the overall brightness of the region R2, so that the brightness of the region R2 viewing by the user U2 at the front viewing angle is the same as the brightness of the regions R1 and R3 viewing by the user U2 at the side viewing angles θ. For instance, the effect of uniform brightness may be achieved by adjusting the dimming grayscales of the light adjusting units 226u (e.g., the dimming grayscales of the light adjusting units 226u1 and 226u3 may be greater than the dimming grayscale of the light adjusting unit 226u2) or by adjusting the brightness of the light emitting elements of the light emitting layer 210 (e.g., the brightness of the light emitting regions 210a and 210c may be greater than the brightness of the light emitting region 210b), but not limited thereto.

In summary, through the control of the light source structure of the display module of the present disclosure, the user is capable of viewing an image with uniform brightness.

Although the embodiments and their advantages of the present disclosure have been described as above, it should be understood that any person having ordinary skill in the art can make changes, substitutions, and modifications without departing from the spirit and scope of the present disclosure. In addition, the protecting scope of the present disclosure is not limited to the processes, machines, manufactures, material compositions, devices, methods and steps in the specific embodiments described in the description. Any person having ordinary skill in the art can understand the current or future developed processes, machines, manufactures, material compositions, devices, methods and steps from the content of the present disclosure, and then, they can be used according to the present disclosure as long as the same functions can be implemented or the same results can be achieved in the embodiments described herein. Thus, the protecting scope of the present disclosure includes the above processes, machines, manufactures, material compositions, devices, methods and steps. Moreover, each claim constitutes an individual embodiment, and the protecting scope of the present disclosure also includes the combination of each claim and each embodiment. The protecting scope of the present disclosure shall be determined by the appended claims.

## Claims

1. A display module (DM), **characterized by,** having a first region (R1, R3, R4 or R5), and comprising:
a display panel (100);
a light source structure (200) configured to provide light to the display panel (100) and comprising a first portion (200a, 200c, 200d or 200e), wherein the first portion (200a, 200c, 200d or 200e) is corresponding to the first region (R1, R3, R4 or R5); and
a light source controller (300) electrically connected to the light source structure (200) and configured to provide a first signal to the first portion (200a, 200c, 200d or 200e) of the light source structure (200);
wherein the first region (R1, R3, R4 or R5) has a first brightness curve (CR1, CR3, CR4 or CR5), the first brightness curve (CR1, CR3, CR4 or CR5) comprises a first brightness and a second brightness, the first brightness is a brightness in a direction parallel to a normal direction of the display panel (100), the second brightness is a brightness at an angle with respect to the normal direction that is not equal to 0 degrees, and the second brightness is greater than the first brightness.

2. The display module (DM) according to claim 1, **characterized in that**, the display module (DM) has a second region (R2), the light source structure (200) comprises a second portion (200b) corresponding to the second region (R2), the light source controller (300) is configured to provide a second signal to the second portion (200b) of the light source structure (200), the second region (R2) has a second brightness curve (CR2), the second brightness curve (CR2) comprises a third brightness and a fourth brightness, the third brightness is a brightness in a direction parallel to the normal direction, the fourth brightness is a brightness at an angle with respect to the normal direction that is not equal to 0 degrees, and the third brightness is greater than the fourth brightness.

3. The display module (DM) according to claim 2, **characterized in that**, the second brightness is a maximum brightness value of the first brightness curve (CR1, CR3, CR4 or CR5), and the third brightness is a maximum brightness value of the second brightness curve (CR2).

4. The display module (DM) according to any one of claims 2 to 3, **characterized in that**, the light source structure (200) comprises a light emitting layer (210), a light adjusting layer (226) and a light path adjustment layer (230).

5. The display module (DM) according to claim 4, **characterized in that**, the light emitting layer (210) has a first light emitting region (210a, 210c, 210d or 210e) and a second light emitting region (210b), the first light emitting region (210a, 210c, 210d or 210e) is corresponding to the first region (R1, R3, R4 or R5), the second light emitting region (210b) is corresponding to the second region (R2), a brightness of the light emitting layer (210) in the first light emitting region (210a, 210c, 210d or 210e) is greater than a brightness of the light emitting layer (210) in the second light emitting region (210b).

6. The display module (DM) according to any one of claims 4 to 5,
**characterized in that**, the light adjusting layer (226) comprises a plurality of first light adjusting units (226u1, 226u3, 226u4 or 226u5) and a plurality of second light adjusting units (226u2), the plurality of first light adjusting units (226u1, 226u3, 226u4 or 226u5) are corresponding to the first region (R1, R3, R4 or R5), and the plurality of second light adjusting units (226u2) are corresponding to the second region (R2);
wherein the light path adjustment layer (230) comprises a first lens (230s1, 230s3, 230s4 or 230s5) and a second lens (230s2), the first lens (230s1, 230s3, 230s4 or 230s5) is corresponding to at least two of the plurality of first light adjusting units (226u1, 226u3, 226u4 or 226u5), and the second lens (230s2) is corresponding to at least two of the plurality of second light adjusting units (226u2);
wherein in a cross-sectional direction, an offset of a turned-on first light adjusting unit (226u1, 226u3, 226u4 or 226u5) among the at least two of the plurality of first light adjusting units (226u1, 226u3, 226u4 or 226u5) relative to a center of the first lens (230s1, 230s3, 230s4 or 230s5) is greater than an offset of a turned-on second light adjusting unit (226u2) among the at least two of the plurality of second light adjusting units (226u2) relative to a center of the second lens (230s2).

7. The display module (DM) according to any one of claims 4 to 6, **characterized in that**, the light adjusting layer (226) comprises a light adjusting medium layer, and the light path adjustment layer (230) comprises a plurality of lenses (230s).

8. The display module (DM) according to any one of claims 2 to 7, **characterized in that**, the second region (R2) is located on a first side of the first region (R1 or R3), and a brightness of the first region (R1 or R3) at a viewing angle on the first side is greater than the first brightness.

9. The display module (DM) according to any one of claims 1 to 8, **characterized in that**, the first brightness curve (CR4) further has a fifth brightness, the fifth brightness is a brightness at an angle with respect to the normal direction that is greater than 0 degrees, the second brightness is a brightness at an angle with respect to the normal direction that is less than 0 degrees, and the first brightness is between the second brightness and the fifth brightness.

10. An in-vehicle device (ED), **characterized by,** comprising:
a detecting system (SS) configured to determine an eye viewing position (E1 or E2) and generate an eye position signal;
an in-vehicle computer (VC) electrically connected to the detecting system (SS), and configured to generate an adjustment signal according to the eye position signal; and
a display module (DM) having a first region (R1, R3, R4 or R5), and electrically connected to the in-vehicle computer (VC) to receive the adjustment signal, wherein the display module (DM) comprises:
a display panel (100);
a light source structure (200) configured to provide light to the display panel (100) and comprising a first portion (200a, 200c, 200d or 200e), wherein the first portion (200a, 200c, 200d or 200e) is corresponding to the first region (R1, R3, R4 or R5); and
a light source controller (300) electrically connected to the light source structure (200), and configured to provide a first signal to the first portion (200a, 200c, 200d or 200e) of the light source structure (200) according to the adjustment signal;
wherein the first region (R1, R3, R4 or R5) has a first brightness curve (CR1, CR3, CR4 or CR5), the first brightness curve (CR1, CR3, CR4 or CR5) comprises a first brightness and a second brightness, the first brightness is a brightness in a direction parallel to a normal direction of the display panel (100), the second brightness is a brightness at an angle with respect to the normal direction that is not equal to 0 degrees, and the second brightness is greater than the first brightness.
